# EUROPEAN PATENT SPECIFICATION

(11) **EP 2 056 417 B1**
(45) Date of publication and mention of the grant of the patent: **01.09.2010**
(21) Application number: 08167361.8
(22) Date of filing: 23.10.2008
(51) Int. Cl.: H02G 3/10

(54) **Elongated gutter with terminal holder**
Längliche Rinne mit Kontakthalterung
Gouttière allongée avec support de terminal

(30) Priority: 01.11.2007 NL 1034615
(43) Date of publication of application: 06.05.2009
(73) Proprietor: ABB B.V., 6716 AA Ede (NL)
(72) Inventor: Witte, Adriaan Marinus, 6716 AA, EDE (NL)
(74) Representative: Geurts, Franciscus Antonius

(56) References cited:
- EP-A- 1 746 697
- NL-C2- 1 016 989

## Description

### BACKGROUND OF THE INVENTION

The invention relates to an assembly comprising an elongated gutter having a bottom and two sides standing upright from the bottom and having a free end edge, a box-shaped terminal holder having an internal electric connection and an opening for in an insertion direction passing an electric conductor to the connection.

A known example of such an assembly is a wire gutter in which electric feeder cables and data cables are situated, wherein the cables are connected to sockets against the outer side of the wire gutter. The wire gutter for instance is suspended over machinery, wherein the plugs of the machines are connected to the sockets on the wire gutter.

After arranging the wire gutter the electrician passes the necessary cables through the wire gutter, and attaches the necessary sockets against the outer side of the gutter. He will often have to stand on a ladder to do so, as a result of which it is harder to exert force on the cables. The ends of the cables are bent away towards the side and passed transverse to the longitudinal direction through the bars in order to be connected to the sockets. Particularly thick and as a result stiff cables are difficult to bend away, as a result of which passing through and connection to the sockets is laborious.

It is an object of the invention to provide an assembly of an elongated gutter having a box-shaped terminal holder of the type mentioned above, providing ease of installation in particular for thick and as a result rigid cables.

### SUMMARY OF THE INVENTION

The invention provides, according to a first aspect, an assembly comprising an elongated gutter having a bottom and two sides standing upright from the bottom and having a free end edge, a first box-shaped terminal holder having an internal electric connection and an opening for in an insertion direction inserting an electric conductor to the connection, and a coupling piece which is attached to the first terminal holder by means of first attachment means and is attached against the side of the gutter by means of second attachment means, wherein the coupling piece and the attachment means are adapted for considered in top view of the bottom retaining the first terminal holder with the insertion direction diagonal to the longitudinal direction of the gutter.

The insertion direction is kept diagonal to the longitudinal direction of the gutter, as a result of which the electric conductor only needs to be bent into said diagonal position in order to be connected.

According to a second aspect, the invention provides an assembly, particularly as mentioned above, comprising an elongated gutter having a bottom and two sides standing upright from the bottom and having a free end edge, a first box-shaped terminal holder having an internal electric connection and an opening for in an insertion direction inserting an electric conductor to the connection, and a coupling piece which is attached to the first terminal holder by means of first attachment means and is attached against the side of the gutter by means of second attachment means, wherein the coupling piece and the attachment means are adapted for substantially retaining the opening of the first terminal holder entirely above the free end edge.

The opening of the first terminal holder is retained entirely above the free end edge, as a result of which the electric conductor can be connected above the gutter. As a result the electric conductor need not be passed through bars or other apertures in the side wall.

In one embodiment the first terminal holder, the coupling piece and the attachment means after attachment form an in itself shape-retaining assembly for after attachment permanently retaining the terminal holder in a same fixed position or orientation with respect to the gutter. The orientation of the first terminal holder with respect to the gutter can then remain fixed despite external forces active on the first terminal holder, such as bend-back forces of a relatively rigid electric conductor situated in the gutter.

In one embodiment the insertion direction substantially extends in a plane of symmetry of the first terminal holder which plane is oriented transverse to the bottom.

Not having to pass the electric conductor through bars or other apertures in the side wall and/or only having the bend it to a diagonal position, is particularly advantageous when installing thick or rigid electric conductors.

In one embodiment the coupling piece and the attachment means are adapted for retaining the first terminal holder with the insertion direction substantially parallel to the bottom. The electric conductor can then be connected from the gutter in horizontal direction to the first terminal holder.

In one embodiment the coupling piece and the attachment means are adapted for considered in top view of the bottom retaining the first terminal holder with the insertion direction in several selectable, preferably pre-determined positions. The several positions provide the electrician the freedom to place the first terminal holder with the insertion direction diagonal to the longitudinal direction of the gutter only when this is necessary due to the rigidity of the electric conductor.

For that purpose the coupling piece and the attachment means may be adapted for considered in top view of the bottom retaining the first terminal holder with the insertion direction substantially transverse to the longitudinal direction of the gutter. Alternatively or additionally thereto the coupling piece and the attachment means may be adapted for considered in top view of the bottom retaining the first terminal holder with the insertion direction substantially in the longitudinal direction of the gutter.

In one embodiment thereof the first attachment means are adapted for retaining the first terminal holder with the insertion direction in several positions with respect to the coupling piece. According to said embodiment the coupling piece can be always the same, wherein the first attachment means provide the possibility of the several positions.

In one embodiment the coupling piece comprises a support wall extending parallel to the bottom on which wall the first terminal holder can be attached by means of the second attachment means.

The terminal holder can easily be placed on the coupling piece that has already been attached to the gutter when the first attachment means comprise an insertion connection with a hole in the coupling piece or the first terminal holder, and an insertion member fitting therein on the first terminal holder or the coupling piece.

The insertion member and the hole are able to ensure the possibility of the several positions when insertion member in its cross-section has a contour having at least one angled corner, wherein the hole in the same cross-section has a contour having the same number or a plurality of the number of angled corners of the insertion member.

After insertion the first terminal holder remains durably connected to the coupling piece when the insertion connection is self-locking.

In one simple embodiment thereof the insertion member is provided with a locking surface extending transverse to the insertion direction, which locking surface engages behind a boundary of the hole.

With relatively little material the insertion member can obtain a square contour when the insertion member is built up with two adjacently extending spring lips, wherein the spring lips preferably are provided with a barb.

The coupling piece can stably be secured against the upright side of the gutter when the coupling piece comprises an abutment wall abutting the side and extending parallel thereto, wherein the abutment wall preferably is oriented transverse to the support wall.

In one development the gutter is a wire gutter built up with rigid wires extending in the longitudinal direction of the gutter, wherein the second attachment means engage onto a rigid wire of the side.

The coupling piece can be attached to the upright side in one continuous motion when the second attachment means comprise a hook lip placed over a rigid wire, which hook lip projects from the coupling piece.

Getting detached from the coupling piece placed can then be counteracted when the shape of the hook lip is adjusted to the thickness of the rigid wire for a clamping engagement onto the rigid wire, wherein the hook lip preferably is placed around the rigid wire by in placement direction overcoming a threshold force.

The coupling piece can be attached from the top to the upright side when the hook lip with a free end faces away from the terminal holder.

Tilting of the coupling piece with a directional component in the longitudinal direction of the gutter can be counteracted when the second attachment means comprise several spaced apart hook lips that engage onto the same rigid wire.

Tilting of the coupling piece with a directional component transverse to the longitudinal direction of the gutter can be counteracted when the second attachment means comprise several spaced apart hook lips that engage onto several rigid wires of the upright side.

In one development the gutter is a cable gutter or cable track formed with an angle bended plate that is provided with perforations and/or mounting holes, wherein the second attachment means comprise a hammer rivet, spread rivet and/or bifurcated rivet, which from the coupling piece engage onto a perforation or mounting hole in the side.

A compact embodiment comprises several first terminal holders which with the first attachment means are adjacently attached to the coupling piece.

In one embodiment the coupling piece is provided with third attachment means, preferably slide-in connection means, for attachment of a second terminal holder to the coupling piece in addition to or as an alternative to a first terminal holder. The electrician is then able to decide on site how many and which type of terminal holder is/are to be placed on the coupling piece.

The coupling piece and/or the first terminal holder preferably is made of an injection mouldable plastic.

The invention furthermore relates to a first terminal holder and/or a coupling piece intended or suitable for the assembly according to any one of the preceding claims.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached drawings, in which:
Figure 1 shows an isometric top view of a wire gutter with a cable connection according to the invention;
Figure 2 shows an isometric side view of the wire gutter according to figure 1;
Figure 3 shows a top view of the wire gutter according to figures 1 and 2;
Figure 4 shows a bottom view of a connection part of the cable connection according to the preceding figures; and

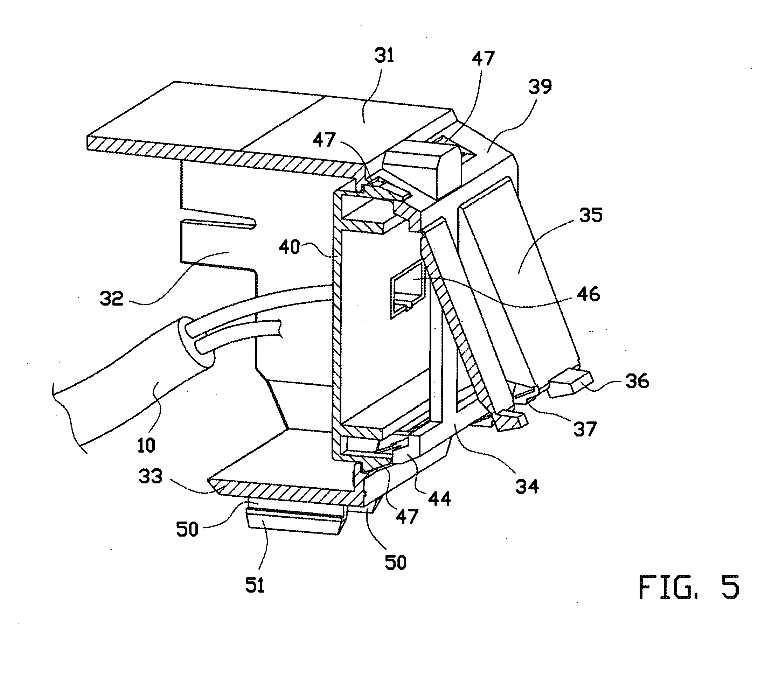

Figure 5 shows an isometric front view of the connection part according to figure 4.

### DETAILED DESCRIPTION OF THE DRAWINGS

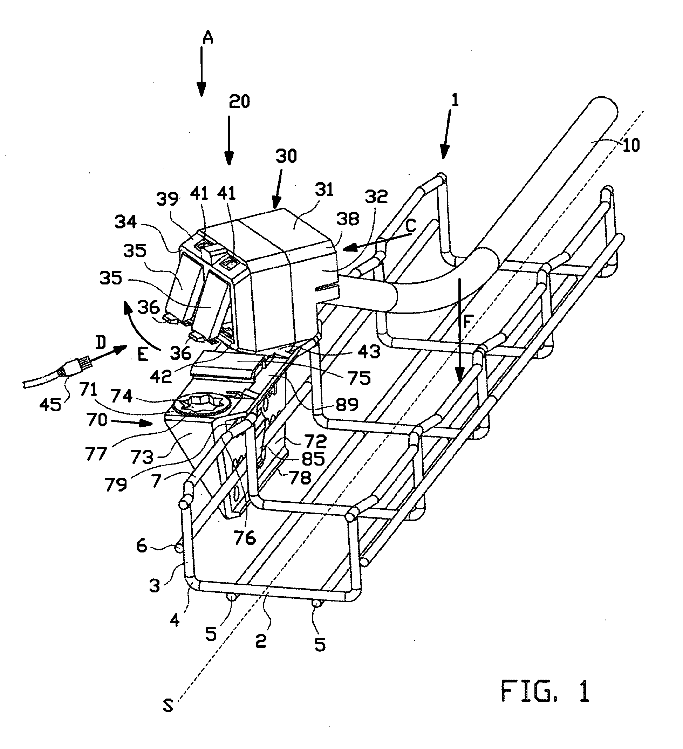

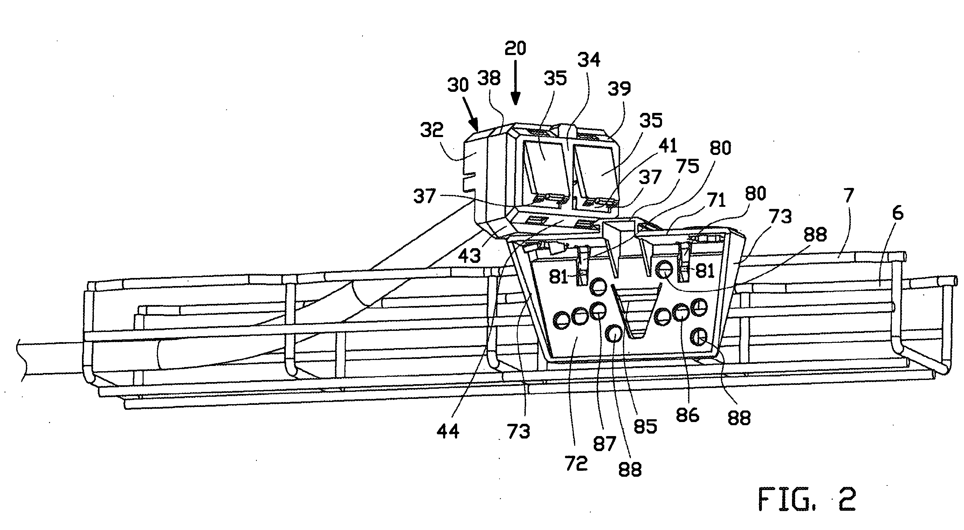

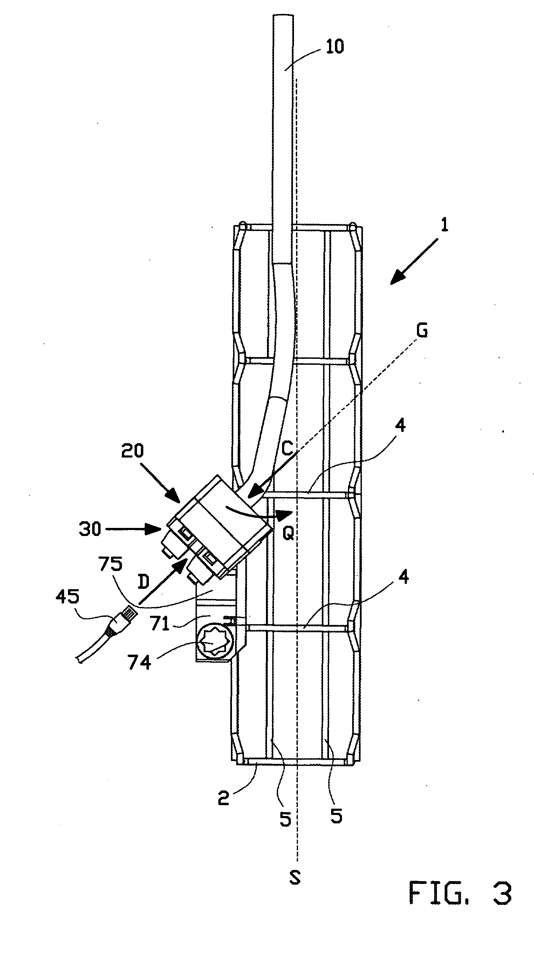

The metal wire gutter 1 as shown in figures 1-3 comprises a bottom 2 and two side walls 3 that are formed by angle bended transverse wires or bars 4 to which parallel bottom wires 5 and side wires 6, 7 have been welded. The wire gutter 1 is known per se. In the wire gutter 1 lies a rigid, thick electricity cable 10. In this example the electricity cable 10 is a data cable comprising several bundles of thin conductors, such as a multiple UTP cable. The data cable 10 is connected to a cable connection 20 according to the invention, which is attached at the outer side of the side wall 3. The wire gutter 1 is for instance suspended over machinery in order to operate machines that are not further shown.

The cable connection 20 comprises a junction box or terminal box 30 that is secured onto a coupling piece 70. The junction box 30 has an external substantially straight or square block shape, and comprises an upper wall 31 which via two side bevellings 38 and a front bevelling 39 merges into two parallel side walls 32 and a front wall 34. Said walls 32, 34 via side bevellings 43 and a front bevelling 44 merge into a bottom wall 33. In the front wall 34 two lids 35 are provided which after opening provide access from the front side to the inner space of the hollow junction box 30. At the leaf side the lids 35 are provided with a finger engagement member 36 and two snappers 37 for opening and keeping the lids 35 shut, respectively.

At the rear side the junction box 30 is open for the insertion of the end of the data cable 10 in insertion direction C. When mounting, the end of the data cable 10 is introduced in the insertion direction C substantially parallel to or in the vertical plane of symmetry G of the junction box 30, and substantially parallel to the bottom 2, after which the data cable 10 due to its weight has lowered itself into the gutter 1 and with the end has arrived at a small angle of 20 degrees at the most to the plane of symmetry G.

At the inner side the junction box 30 comprises an insert piece 40 having four cams 47 with which the insert piece 40 is secured in mounting holes 41 in the front bevellings 39, 44. Behind each lid 35 the insert piece 40 comprises a socket 46 that is connected to a part of the data cable 10. After opening a lid 35 in direction E a data plug 45 can be plugged into the socket 46 in insertion direction D, wherein the insertion direction D substantially extends parallel to or in the vertical plane of symmetry G of the junction box 30, or at a small angle of a few dozen degrees at the most thereto.

The coupling piece 70 is built up with an upper wall 71, a side wall 72 oriented transverse thereto, and two bevelled reinforcement walls 73. At the upper side an attachment rail 75 extends to which a junction box that is known per se and not further shown can be secured. At the top and bottom sides of the side wall 72 an abutment wall 79 and an abutment wall 78 project. The upper wall 71 with a free support edge 89 projects from the uppermost abutment wall 79, and the uppermost abutment wall 79 via a support wall 76 that is oriented diagonal or transverse thereto merges into the side wall 72. The upper wall 71 comprises an attachment hole 74 on either side of the attachment rail 75, wherein in one of the attachment holes 74 a junction box 20 is secured. In the attached condition as shown the upper side of the upper wall 71 is situated entirely above the side wall 3, wherein the diagonal support wall 76 supports on the uppermost side wire 7.

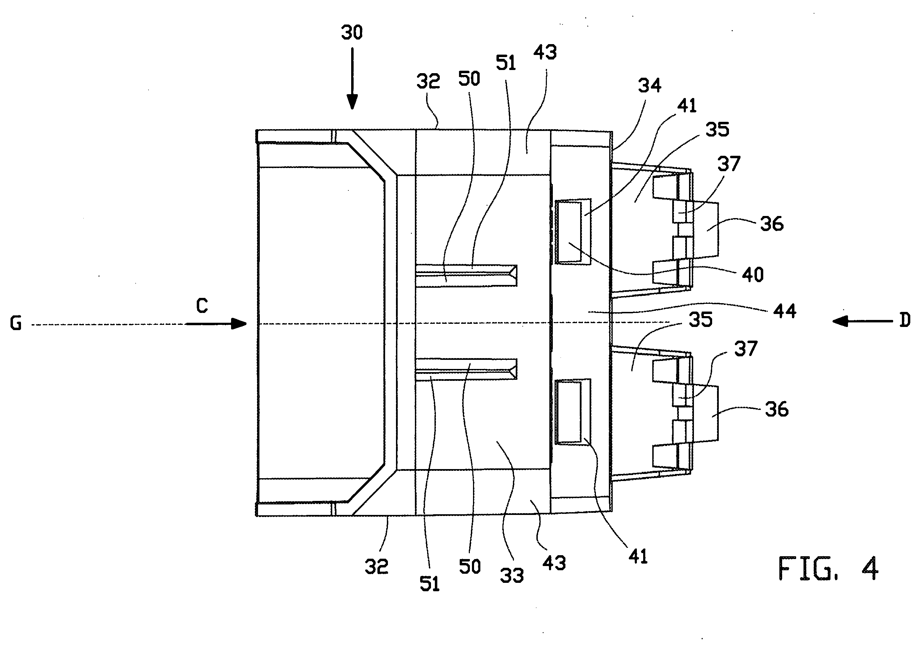

The attachment holes 74 are formed in a circular elevation 77 of the upper wall 71, and have a contour that is built up with two squares. One of the squares extends with two sides parallel to the side wall 72, the other square is rotated 45 degrees thereto. As shown in figure 4 two parallel spring lips 50 with an extended barb 51 are formed at the bottom wall 33 of the junction box 20, which barbs mate with a square of the attachment holes 74. The junction box 20 can be snapped fixed to the coupling piece 70 in direction A, wherein the barbs 51 engage behind the upper wall 71. Due to the shape of the attachment holes 74 the junction box 30 can be placed with the insertion direction D or insertion direction C in top view at 45 degrees diagonal to the longitudinal direction or centre line S of the wire gutter 1, or for instance transverse to or parallel to the longitudinal direction or centre line S.

In the upper abutment wall 79 and the side wall 72 a spring lip 80 with a barb 81 is formed on either side of the support wall 76, wherein the basis of the spring lip 80 extends in the plane of the abutment wall 78 and the free end extends above the side wall 72. The barbs 81 engage behind the uppermost side wire 7. In the middle of the side wall 72 a larger, central attachment lip 85 is formed of which the end is situated aside the side wall 72, but within the plane of the abutment wall 78 and the abutment edge 79. The attachment lip 85 engages clampingly onto the uppermost but one side wire 6.

The side wall 72 comprises two series 86, 87 of mounting holes and a number of scattered mounting holes 88 for alternative attachment of the coupling piece 70 to a cable gutter or cable track that is not further shown. A cable gutter or cable track is made of angle bended steel plate provided with mounting holes or perforations. The coupling piece 70 then supports outside of the diagonal support wall 76 with the free support wall 89 on the upper edge of the side wall of the gutter, wherein the uppermost abutment wall 79, the lowermost abutment wall 78 and optionally the central attachment lip 85 abut the side wall of the gutter. The coupling piece 70 is then secured by arranging hammer rivets, spread rivets or bifurcated rivets in two mounting holes 86, 87, 88 that coincide with mounting holes or perforations in the gutter.

The gutter 1, the coupling piece 70 and the junction box 30 attached thereto in the installed condition as shown in figures 1-3 form a permanent in itself shape-retaining unity, as a result of which the junction box 30 is retained in a fixed position or orientation with respect to the gutter 1, even under the effects of gravity F on the heavy data cable 10 or bend-back forces Q exerted by the rigid data cable 10 on the junction box 30.

The above description is included to illustrate the operation of preferred embodiments of the invention and not to limit the scope of the invention. Starting from the above explanation many variations that fall within the spirit and scope of the present invention will be evident to an expert.

## Claims

1. Assembly comprising an elongated gutter (1) having a bottom and two sides standing upright from the bottom (2) and having a free end edge, a first box-shaped terminal holder (30) having an internal electric connection and an opening for in an insertion direction inserting an electric conductor (10) to the connection, and a coupling piece (70) which is attached to the first terminal holder (30) by means of first attachment means (74) and is attached against the side of the gutter by means of second attachment means, wherein the coupling piece and the attachment means (74) are adapted for c nsidered in top view of the bottom (2) retaining the first terminal holder (30) with the insertion direction (c) diagonal to the longitudinal direction of the gutter (1).

2. Assembly according to claim 1, wherein the coupling piece (70) and the attachment means (74) are adapted for substantially retaining the opening of the first terminal holder entirely above the free end edge.

3. Assembly according to claim 1 or 2, wherein the first terminal holder (30), the coupling piece (70) and the attachment means (74) after attachment form an in itself shape-retaining assembly for after attachment permanently retaining the terminal holder (30) in a same fixed position or orientation with respect to the gutter (1).

4. Assembly according to any one of the preceding claims, wherein the insertion direction (c) substantially extends in a plane of symmetry of the first terminal holder (30) which plane is oriented transverse to the bottom.

5. Assembly according to any one of the preceding claims, wherein the coupling piece (70) and the attachment means (74) are adapted for retaining the first terminal holder (30) with the insertion direction substantially parallel to the bottom.

6. Assembly according to any one of the receding claims, wherein the coupling piece (70) and the attachment means (74) are adapted for considered in top view of the bottom retaining the first terminal holder (30) with the insertion direction (c) in several selectable, preferably pre-determined positions.

7. Assembly according to any one of the preceding claims, wherein the coupling piece (70) and the attachment means (74) are adapted for considered in top view of the bottom retaining the first terminal holder (30) with the insertion direction (c) substantially transverse to the longitudinal direction of the gutter.

8. Assembly according to any one of the receding claims, wherein the coupling piece (70) and the attachment means (74) are adapted for considered in top view of the bottom retaining the first terminal holder (30) with the insertion direction (c) substantially in the longitudinal direction of the gutter.

9. Assembly according to any one of the preceding claims, wherein the coupling piece (30) comprises a support wall extending parallel to the bottom on which wall the first terminal holder (30) can be attached by means of the second attachment means.

10. Assembly according to any one of the preceding claims, wherein the first attachment means comprise an insertion connection with a hole (74) in the coupling piece or the first terminal holder, and an insertion member fitting (50) therein on the first terminal holder (30) or the coupling piece, wherein the insertion member in its cross-section preferably has a contour having at least one angled corner, wherein the hole in the same cross-section has a contour having the same number or a plurality of the number of angled corners of the insertion member.

11. Assembly according to claim 10, wherein the insertion connection is self-locking, wherein the insertion member (50) preferably is provided with a locking surface (51) extending transverse to the insertion direction, which locking surface engages behind a boundary of the hole.

12. Assembly according to claim 10 or 11, wherein the insertion member (50) is built up with two adjacently extending spring lips, wherein the spring lips preferably are provided with a barb (51).

13. Assembly according to any one of the preceding claims, wherein the coupling piece (70) comprises an abutment wall (78, 79) abutting the side and extending parallel thereto, wherein the abutment wall preferably is oriented transverse to the support wall.

14. Assembly according to any one of the preceding claims, wherein the gutter (1) is a wire gutter built up with rigid wires (6) extending in the longitudinal direction of the gutter, wherein the second attachment means engage onto a rigid wire of the side, wherein the second attachment means preferably comprise a hook lip (85) placed over a rigid wire, which hook lip (85) projects from the coupling piece, wherein the shape of the hook lip (85) preferably is adjusted to the thickness of the rigid wire (6) for a clamping engagement onto the rigid wire, wherein the hook lip (85) preferably is placed around the rigid wire (6) by in placement direction overcoming a threshold force.

15. Assembly according to any one of the preceding claims, wherein the gutter (1) is a cable gutter or cable track formed with an angle bended plate that is provided with perforations and/or mounting holes, wherein the second attachment means comprise a hammer rivet, spread rivet and/or bifurcated rivet, which from the coupling piece (70) engage onto a perforation or mounting hole in the side.

## Patentansprüche

1. Aufbau enthaltend eine längliche Rinne (1), die einen Boden und zwei Seiten aufweist, die vom Boden (2) aufrecht stehen und eine freie Endkante aufweisen, einen ersten kastenförmigen Kontakthalter (30), der einen inneren elektrischen Anschluss und eine Öffnung zum Einsetzen eines elektrischen Leiters (10) an den Anschluss in einer Einsetzrichtung aufweist, und ein Kopplungsteil (70), das am ersten Kontakthalter (30) mittels erster Anbringungsmittel (74) angebracht ist und gegen die Seite der Rinne mittels zweiter Anbringungsmittel angebracht ist, wobei das Kopplungsteil und das Anbringungsmittel (74) dazu geeignet sind, bei Betrachtung des Bodens (2) in Draufsicht, den ersten Kontakthalter (30) mit Einsetzrichtung (C) diagonal zur Längsrichtung der Rinne (1) zu halten.

2. Aufbau nach Anspruch 1, bei dem das Kopplungsteil (70) und die Anbringungsmittel (74) dazu geeignet sind, die Öffnung des ersten Kontakthalters im Wesentlichen vollständig über der freien Endkante zu halten.

3. Aufbau nach Anspruch 1 oder 2, bei dem der erste Kontakthalter (30), das Kopplungsteil (70) und die Anbringungsmittel (74) nach Anbringen einen eigenformstabilen Aufbau bilden, zur nach Anbringung dauerhaften Halterung des Kontakthalters (30) in einer gleichen fixierten Position oder Orientierung in Bezug auf die Rinne (1).

4. Aufbau nach einem der vorherigen Ansprüche, bei dem sich die Einsetzrichtung (C) im Wesentlichen in einer Symmetrieebene des ersten Kontakthalters (30) erstreckt, welche Ebene quer zum Boden orientiert ist.

5. Aufbau nach einem der vorherigen Ansprüche, bei dem das Kopplungsteil (70) und die Anbringungsmittel (74) dazu geeignet sind, den ersten Kontakthalter (30) mit der Einsetzrichtung im Wesentlichen parallel zum Boden zu halten.

6. Aufbau nach einem der vorherigen Ansprüche, bei dem das Kopplungsteil (70) und die Anbringungsmittel (74) dazu geeignet sind, bei Betrachtung in Draufsicht auf den Boden, den ersten Kontakthalter (30) mit der Einsetzrichtung (C) in mehreren auswählbaren, vorzugsweise vorbestimmten Positionen zu halten.

7. Aufbau nach einem der vorherigen Ansprüche, bei dem das Kopplungsteil (70) und die Anbringungsmittel (74) dazu geeignet sind, bei Betrachtung in Draufsicht auf den Boden, den ersten Kontakthalter (30) mit der Einsetzrichtung (C) im Wesentlichen quer zur Längsrichtung der Rinne zu halten.

8. Aufbau nach einem der vorherigen Ansprüche, bei dem das Kopplungsteil (70) und die Anbringungsmittel (74) dazu geeignet sind, bei Betrachtung in Draufsicht auf den Boden, den ersten Kontakthalter (30) mit der Einsetzrichtung (C) im Wesentlichen in der Längsrichtung der Rinne zu halten.

9. Aufbau nach einem der vorherigen Ansprüche, bei dem das Kopplungsteil (70) eine Stützwand enthält, die sich im Wesentlichen parallel zum Boden erstreckt, an welcher Wand der erste Kontakthalter (30) mittels der zweiten Anbringungsmittel angebracht werden kann.

10. Aufbau nach einem der vorherigen Ansprüche, bei dem die ersten Anbringungsmittel eine Einsteckverbindung mit einem Loch (74) im Kopplungsteil oder im ersten Kontakthalter enthalten und ein darin hineinpassendes Einsteckelement (50) am ersten Kontakthalter (30) oder am Kopplungsteil, wobei das Einsteckelement im Querschnitt vorzugsweise eine Kontur besitzt, die wenigstens ein gewinkeltes Eck aufweist, wobei das Loch im gleichen Querschnitt eine Kontur besitzt, die die gleiche Anzahl oder eine Vielzahl der gewinkelten Ecken des Einsteckelements aufweist.

11. Aufbau nach Anspruch 10, bei dem die Einsteckverbindung selbstarretierend ist, wobei das Einsteckelement (50) vorzugsweise mit einer Arretierfläche (51) versehen ist, die sich quer zur Einsteckrichtung erstreckt, welche Arretierfläche hinter einem Rand des Lochs in Eingriff kommt.

12. Aufbau nach Anspruch 10 oder 11, wobei das Einsteckelement (50) aus zwei sich benachbart erstreckenden Federlippen aufgebaut ist, wobei die Federlippen vorzugsweise mit einem Widerhaken (51) versehen sind.

13. Aufbau nach einem der vorherigen Ansprüche, bei dem das Kopplungsteil (70) eine Widerlagerwand (78, 79) enthält, die an der Seite angrenzt und sich parallel dazu erstreckt, wobei die Widerlagerwand vorzugsweise quer zur Stützwand orientiert ist.

14. Aufbau nach einem der vorherigen Ansprüche, bei dem die Rinne (1) eine Drahtrinne ist, die aus starren Drähten (6) aufgebaut ist, die sich in Längsrichtung der Rinne erstrecken, wobei die zweiten Anbringungsmittel mit einem starren Draht auf der Seite in Eingriff kommen, wobei die zweiten Anbringungsmittel vorzugsweise eine Hakenlippe (85) enthält, die über einem starren Draht angeordnet ist, welche Hakenlippe (85) vom Kopplungsteil vorsteht, wobei die Form der Hakenlippe (85) vorzugsweise zum Klemmeingriff auf dem starren Draht vorzugsweise auf die Dicke des starren Drahtes (6) angepasst ist, wobei die Hakenlippe (85) vorzugsweise durch Überwinden einer Grenzkraft in Anordnungsrichtung um den starren Draht (6) angeordnet ist.

15. Aufbau nach einem der vorherigen Ansprüche, bei dem die Rinne (1) eine Kabelrinne oder ein Kabelkanal ist, der aus einem abgewinkelten Blech ausgebildet ist, das mit Perforationen und/oder Montagelöchern versehen ist, wobei die zweiten Anbringungsmittel einen Hammemiet, einen Spreizniet und/oder einen Zweispitzniet enthalten, der vom Kopplungsteil (70) mit der Perforation oder dem Montageloch in der Seite in Eingriff steht.

## Revendications

1. Ensemble comprenant une gouttière allongée (1) ayant une partie inférieure et deux côtés placés verticalement par rapport à la partie inférieure (2) et ayant un bord d'extrémité libre, un premier support terminal en forme de boîtier (30) ayant une connexion électrique interne et une ouverture pour insérer dans une direction d'insertion un conducteur électrique (10) dans la connexion, et une pièce d'accouplement (70) qui est fixée au premier support terminal (30) au moyen de premiers moyens de fixation (74) et est fixée contre le côté de la gouttière au moyen de seconds moyens de fixation, dans lequel la pièce d'accouplement et les moyens de fixation (74) sont adaptés, selon la vue de dessus de la partie inférieure (2), pour maintenir le premier support terminal (30) avec la direction d'insertion (c) diagonale par rapport à la direction longitudinale de la gouttière (1).

2. Ensemble selon la revendication 1, dans lequel la pièce d'accouplement (70) et les moyens de fixation (74) sont adaptés pour maintenir sensiblement l'ouverture du premier support terminal entièrement au-dessus du bord d'extrémité libre.

3. Ensemble selon la revendication 1 ou 2, dans lequel le premier support terminal (30), la pièce d'accouplement (70) et les moyens de fixation (74) après fixation forment un ensemble conservant en soi sa forme pour maintenir de manière permanente après fixation le support terminal (30) dans une même position ou orientation fixe par rapport à la gouttière (1).

4. Ensemble selon l'une quelconque des revendications précédentes, dans lequel la direction d'insertion (c) s'étend sensiblement dans un plan de symétrie du premier support terminal (30), lequel plan est orienté transversalement par rapport à la partie inférieure.

5. Ensemble selon l'une quelconque des revendications précédentes, dans lequel la pièce d'accouplement (70) et les moyens de fixation (74) sont adaptés pour maintenir le premier support terminal (30) avec la direction d'insertion sensiblement parallèle à la partie inférieure.

6. Ensemble selon l'une quelconque des revendications précédentes, dans lequel la pièce d'accouplement (70) et les moyens de fixation (74) sont adaptés, selon la vue de dessus de la partie inférieure, pour maintenir le premier support terminal (30) avec la direction d'insertion (c) dans plusieurs positions sélectionnables, de préférence prédéterminées.

7. Ensemble selon l'une quelconque des revendications précédentes, dans lequel la pièce d'accouplement (70) et les moyens de fixation (74) sont adaptés, selon la vue de dessus de la partie inférieure, pour maintenir le premier support terminal (30) avec la direction d'insertion (c) sensiblement transversale à la direction longitudinale de la gouttière.

8. Ensemble selon l'une quelconque des revendications précédentes, dans lequel la pièce d'accouplement (70) et les moyens de fixation (74) sont adaptés, selon la vue de dessus de la partie inférieure, pour maintenir le premier support terminal (30) avec la direction d'insertion (c) sensiblement dans la direction longitudinale de la gouttière.

9. Ensemble selon l'une quelconque des revendications précédentes, dans lequel la pièce d'accouplement (30) comprend une paroi de support s'étendant parallèlement à la partie inférieure, paroi sur laquelle le premier support terminal (30) peut être fixé au moyen des seconds moyens de fixation.

10. Ensemble selon l'une quelconque des revendications précédentes, dans lequel les premiers moyens de fixation comprennent une connexion d'insertion avec un orifice (74) dans la pièce d'accouplement ou le premier support terminal, et une fixation d'élément d'insertion (50) à l'intérieur de celui-ci sur le premier support terminal (30) ou la pièce d'accouplement, dans lequel l'élément d'insertion dans sa section transversale a de préférence un profil ayant au moins un coin angulaire, dans lequel l'orifice dans la même section transversale a un profil ayant le même nombre ou une pluralité du nombre de coins angulaires de l'élément d'insertion.

11. Ensemble selon la revendication 10, dans lequel la connexion d'insertion est à verrouillage automatique, dans lequel l'élément d'insertion (50) est de préférence doté d'une surface de verrouillage (51) s'étendant transversalement à la direction d'insertion, laquelle surface de verrouillage se met en prise à l'arrière d'une limite de l'orifice.

12. Ensemble selon la revendication 10 ou 11, dans lequel l'élément d'insertion (50) est constitué de deux lèvres à ressort s'étendant de manière adjacente, dans lequel les lèvres à ressort sont de préférence dotées d'une cannelure (51).

13. Ensemble selon l'une quelconque des revendications précédentes, dans lequel la pièce d'accouplement (70) comprend une paroi de butée (78, 79) venant en butée contre le côté et s'étendant parallèlement à celui-ci, dans lequel la paroi de butée est de préférence orientée transversalement par rapport à la paroi de support.

14. Ensemble selon l'une quelconque des revendications précédentes, dans lequel la gouttière (1) est une gouttière de fil électrique constituée de fils rigides (6) s'étendant dans la direction longitudinale de la gouttière, dans lequel les seconds moyens de fixation se mettent en prise sur un fil rigide du côté, dans lequel les seconds moyens de fixation comprennent de préférence une lèvre à crochet (85) placée sur un fil rigide, laquelle lèvre à crochet (85) fait saillie à partir de la pièce d'accouplement, dans lequel la forme de la lèvre à crochet est de préférence ajustée à l'épaisseur du fil rigide (6) pour une mise en prise par serrage du fil rigide, dans lequel la lèvre à crochet (85) est de préférence placée autour du fil rigide (6) grâce à une direction de mise en place qui surmonte une force de seuil.

15. Ensemble selon l'une quelconque des revendications précédentes, dans lequel la gouttière (1) est une gouttière de câble ou cheminement de câble formé avec une plaque pliée qui est dotée de perforations et/ou orifices de montage, dans lequel les seconds moyens de fixation comprennent un rivet à marteau, rivet élargi et/ou rivet à tige fendue, qui, à partir de la pièce d'accouplement (70) se mettent en prise avec une perforation ou un orifice de montage dans le côté.
